# FASCICULE DE BREVET EUROPEEN

(11) **EP 2 016 564 B1**
(45) Date de publication et mention de la délivrance du brevet: **23.04.2014**
(21) Numéro de dépôt: 07735754.9
(22) Date de dépôt: 03.05.2007
(51) Int. Cl.: G07B 15/02, G07C 9/00, G06Q 30/02, G06Q 40/00

(54) **SYSTEME DE LOCATION AUTOMATISE**
AUTOMATISIERTES VERLEIHSYSTEM
AUTOMATED RENTAL SYSTEM

(30) Priorité: 11.05.2006 WO PCT/IB2006/051478
(43) Date de publication de la demande: 21.01.2009
(73) Titulaire: Pajot, Eric, 1224 Chênes-bougerie (CH)
(72) Inventeur: Pajot, Eric, 1224 Chênes-bougerie (CH)
(74) Mandataire: Dossmann, Gérard
(86) Numéro de dépôt international: PCT/IB2007/051659
(87) Numéro de publication internationale: WO 2007/132391

(56) Documents cités:
- EP-A- 1 281 588
- FR-A1- 2 744 543
- FR-A1- 2 801 994
- FR-A1- 2 863 752
- US-A1- 2002 174 077

## Description

### Domaine de l'invention

La présente invention concerne la location automatisée d'objets dont le fonctionnement nécessite l'apport d'une source d'énergie, p.ex. électrique. Elle concerne plus précisément la location de tels objets par le biais d'un dispositif portable de communication sans fil, p.ex: un téléphone mobile,

On connaît différents systèmes de location, de véhicules en particulier, présentant un certain degré d'automatisation. De tels systèmes sont décrits dans les documentes brevets FR-A-2 732 144, FR-A-2 744 543, EP-A-0 451 482, DE-A-42 27 969, DE-A-43 01 039, FR-A-2 656 450.

On connait également, par la demande de brevet US2002/0174077, un système de location comprenant un objet à louer telle qu'une bicyclette, munie d'un code d'identification, et un mécanisme de verrouillage lié à la bicyclette, pouvant être activé et désactivé à distance. La système décrit dans ce document comprend également un téléphone mobile avec une interface de télécommunication sans fil et une centrale capable de communiquer de manière bidirectionnelle avec le téléphone mobile pour envoyer à l'utilisateur un code d'identification d'un objet à louer. La centrale comprend également des moyens d'identification de l'utilisateur et des moyens pour gérer les comptes des utilisateurs des objets loués.

Un dispositif contrôleur de l'objet loué comprend un bloc de contrôle de fermeture agissant sur le mécanisme de verrouillage.

Dans le système décrit dans ce document, l'utilisateur contacte la centrale afin que celle-ci lui propose plusieurs objets à louer à proximité de son emplacement.

### Description générale de l'invention

La présente invention est définie dans les revendications annexées.

Dans le présent texte, le terme "objet à louer" doit être considéré de manière très générale. II couvre toute chose matérielle ou immatérielle susceptible d'être louée. A titre d'exemple, on peut citer un véhicule, un appareil (p.ex. une machine à laver), un coffre, une chambre d'hôtel; une cabine de solarium, une consigne automatique dans un lieu public (aéroport, gare, etc...), une place dé parc, une borne électrique (p.ex. pour recharger la batterie d'un véhicule), un ordinateur (p.ex. dans un café internent), un espace publicitaire, p.ex. sur Internet, etc... Un des objectifs de la présente invention consiste à simplifier les systèmes de location actuels.

Un deuxième objectif vise à tirer profit des téléphones portables ou autres appareils similaires tels que "smartphones" ou ordinateurs de poche, en particulier en ce qui concerne les systèmes de messagerie (p.ex. SMS) qui leur sont associés.

Un troisième objectif vise à offrir la possibilité pour l'utilisateur de prendre et restituer l'objet à louer en n'importe quel endroit, prédéfini ou pas, sans devoir p.ex. le rapporter en un lieu donné après usage.

Les objectifs précités sont atteints grâce au système selon l'invention tel que décrit les revendications.

S'agissant de l'activation/désactivation du système lié à l'élément auxiliaire, il convient de relever que dans le cadre de la présente invention, il n'y a pas de transmission directe des signaux entre le dispositif portable et l'objet à louer et/ou l'élément auxiliaire, mais toujours un traitement intermédiaire des signaux par la centrale.

Un transmission directe peut être toutefois possible pour réaliser d'autres actions.

Cette manière de procéder, qui constitue une des caractéristiques fondamentales de l'invention, offre de nombreux avantages, notamment celui d'un meilleur contrôle par la centrale de l'exploitation de l'objet à louer, réduisant de la sorte le risque d'utilisation frauduleuse des objets à louer. L'invention permet en outre de s'affranchir de l'apposition sur l'objet à louer d'une interface plus ou moins coûteuse et volumineuse (Panneau de control spécifique / boutons de commande, etc.).

Comme indiqué précédemment, le système selon l'invention comprend essentiellement les quatre éléments suivants :
a) Un objet à louer muni d'un code d'identification, ce dernier pouvant être de n'importe quel type (code barre, pictogramme, numéro, nom, etc...);
b) Un élément auxiliaire lié fonctionnellement à l'objet à louer et comprenant un système d'activation/désactivation activable à distance;
c) Un dispositif portable, tel que téléphone mobile, comprenant une interface de télécommunication sans fil;
d) Une centrale comprenant des moyens pour assurer une communication bidirectionnelle avec ledit élément auxiliaire et ledit dispositif portable.

L'élément auxiliaire peut être disposé dans l'objet à louer, p.ex. lorsqu'il s'agit d'un véhicule, ou à proximité, p.ex. sur le câble électrique qui alimente l'objet à louer. La centrale peut être composée d'une ou plusieurs plate formes informatiques permettant notamment le contrôle des actions suivantes au moyen d'un dispositif de communication sans fil tel que Wi-Fi, GSM, GPRS, EDGE ou UMTS :
- Réception et émission de signaux, p.ex. sous forme de SMS , MMS, audio ou vidéo, en provenance/direction de l'élément auxiliaire,
- Réception et émission de signaux, p.ex. sous forme de SMS , MMS, audio ou vidéo, en provenance/direction du dispositif portable,
- Identification de l'élément auxiliaire et du dispositif portable, respectivement de leur détenteur,
- Activation/désactivation de l'élément auxiliaire au moyen de signaux se propageant via une interface de communication sans fil,
- Hébergement et création de comptes utilisateurs personnels comprenant des codes d'identification avec coordonnées bancaires ou postales, etc... en vue de débiter les comptes des utilisateurs après usage des objets à louer,
- Possibilités de paiements selon différents modes (prépaiement, débit directs, débit sur compte téléphone, etc...)
- Réception de signaux relatifs à des informations de géo localisation, p.ex. GPS, de l'élément auxiliaire et/ou de l'objet à louer,
- Interrogation et suivi des états de l'élément auxiliaire et/ou de l'objet à louer (veille, actif, désactivé, déchargé, etc...),
- Facturation et confirmation de débit selon le mode de paiement choisi, pour la comptabilité de l'utilisateur.

### Description détaillée de l'invention

L'invention sera mieux comprise ci-après au moyen de deux exemples illustrés par les figures suivantes :
Les figures 1 à 15 décrivent un premier exemple dans lequel l'objet à louer est une lampe électrique.
La figure 16 décrivent un deuxième exemple dans lequel l'objet à louer est un véhicule.

### Exemple 1 : Location d'une lampe

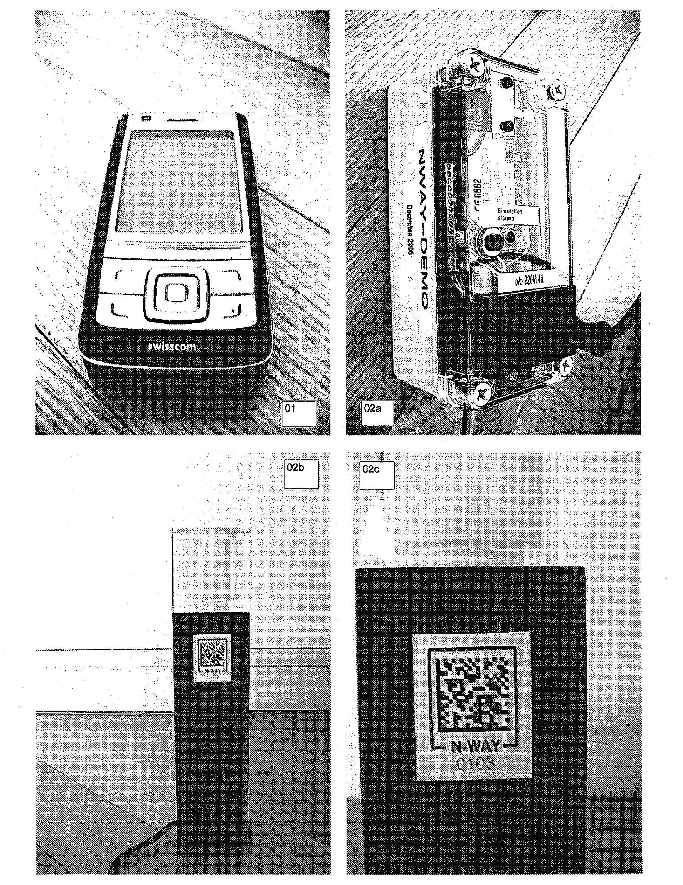

La figure 01 illustre un téléphone portable.
La figure 02a présente un élément auxiliaire connecté au réseau électrique et dans lequel la prise de la lampe est fixée.
La figure 02b illustre une lampe munie d'un code d'identification.
La figure 02c est un agrandissement du code d'identification, ce dernier se présentant en fait de deux manières, à savoir un pictogramme destiné à être saisi par un lecteur optique et un No (0103) destiné à être saisi manuellement sur le clavier du téléphone portable.

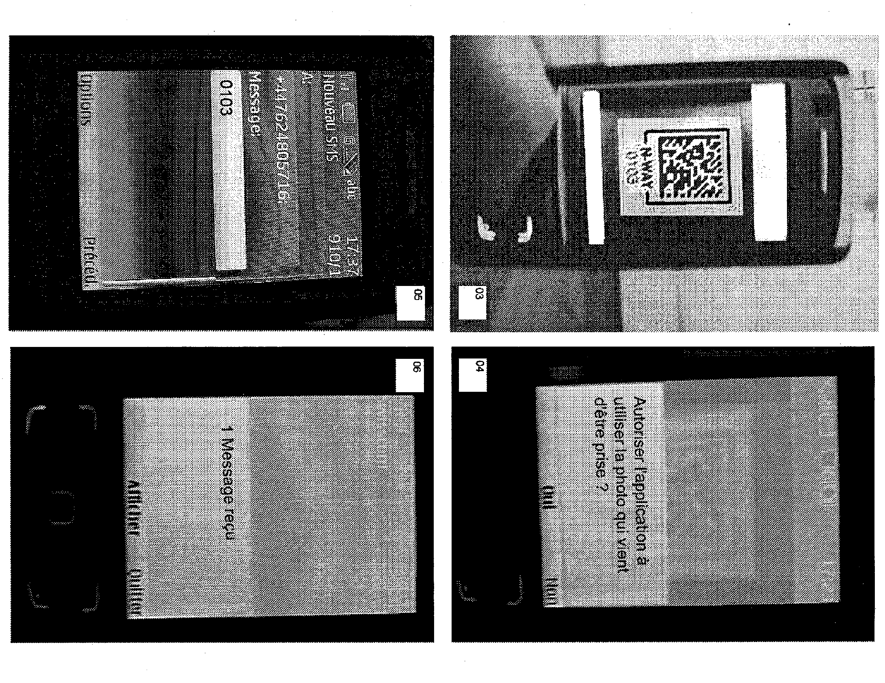

La figure 03 illustre la saisie automatisée du code d'identification au moyen d'un lecteur optique intégré dans le téléphone portable.
La figure 04 présente un message de confirmation du code d'identification saisi automatiquement par le lecteur optique.
La figure 05 présente une variante dans laquelle le code d'identification, le No 0103 dans le cas présent, est saisi manuellement sur le clavier du téléphone portable puis envoyé par SMS en composant un numéro de téléphone.
La figure 06 montre la confirmation du message reçu par la centrale. En outre (non illustré sur cette figure), le message indique également si l'utilisateur est autorisé ou non à louer l'objet.

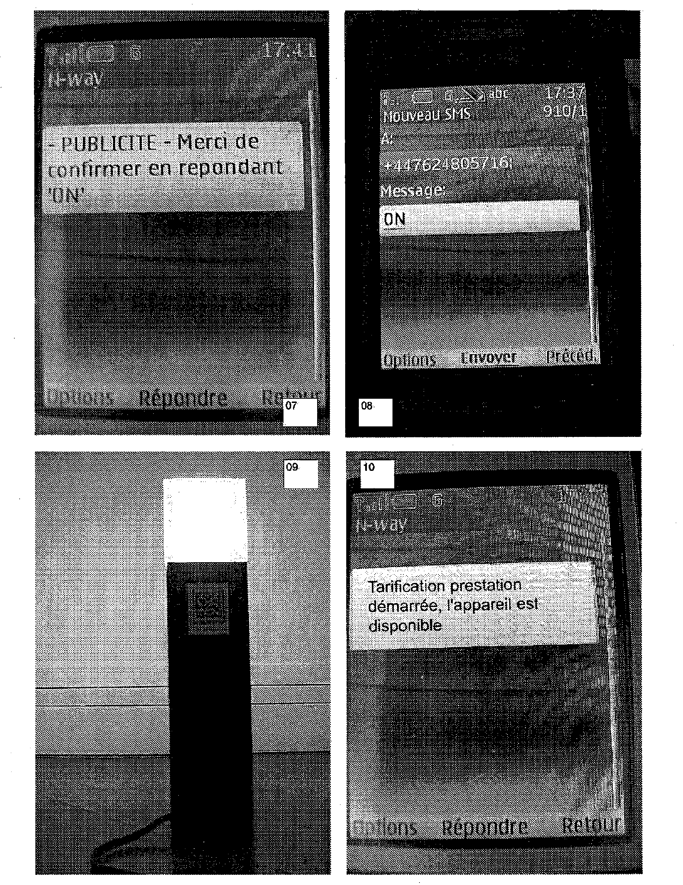

La figure 07 montre la réception d'un message l'invitant (si pas encore fait de manière automatique) à mettre sous tension la lampe. Ce message peut être associé ou non à un insert publicitaire. Optionnellement (non-illustré sur cette figure), une requête d'identification au moyen d'un code peut être effectuée.
La figure 08 illustre l'envoi par l'utilisateur d'un message d'activation de l'appareil à la centrale, cette dernière relayant ensuite le message à l'élément auxiliaire.
La figure 09 montre la lampe allumée, l'élément auxiliaire informe la centrale du fonctionnement de la lampe.
La figure 10 représente un message informant l'utilisateur que la lampe est disponible. A partir de ce moment, le chronométrage et le décompte du temps d'utilisation de la lampe sont enclenchés. Avantageusement, l'utilisateur peut être informé en permanence du temps et du coût total de l'utilisation de la lampe.

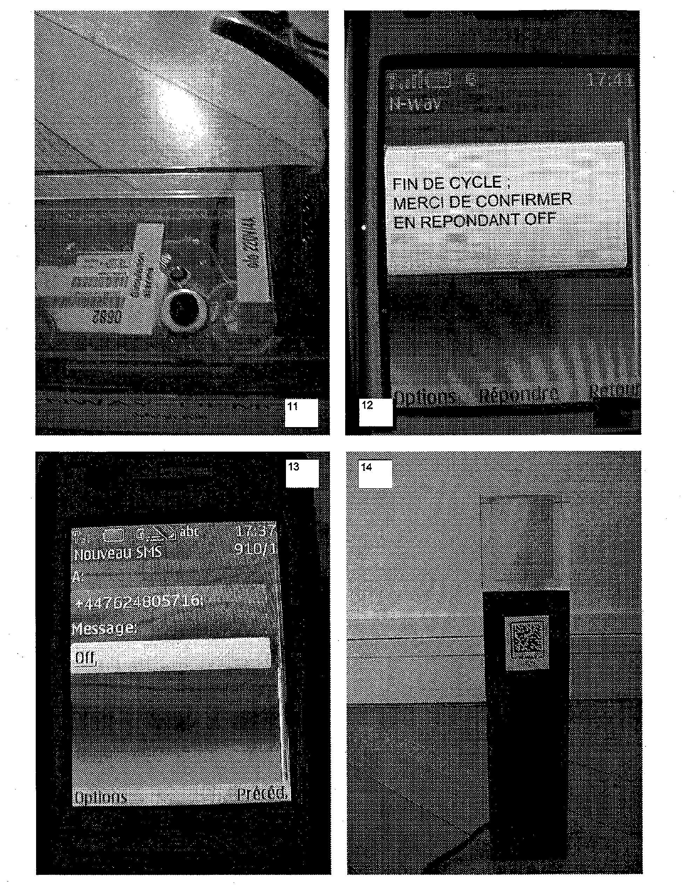

La figure 11 illustre une partie de l'élément auxiliaire qui comporte un bouton pressoir pouvant être actionné par l'utilisateur dans le but de mettre un terme à la l'utilisation de la lampe.

Pour la lampe illustrée sur cette figure, mais de manière générale pour l'objet à louer, l'élément auxiliaire peut comporter un dispositif du type ON/OFF qui réagi à une action manuelle ou autre, p.ex. consécutivement à l'activation d'un capteur. Si l'objet à louer possède un cycle de fonctionnement, p.ex. s'il s'agit d'une machine à laver, un dispositif d'interruption peut être actionné lorsque la machine à terminé son cycle de lavage.

La figure 12 montre un message dans lequel la centrale informe l'utilisateur de la fin du cycle d'utilisation de l'objet à louer.

La figure 13 montre la confirmation par l'utilisateur de la fin de la période de location.

La figure 14 montre la lampe qui vient d'être mise hors tension par la centrale via l'élément auxiliaire.

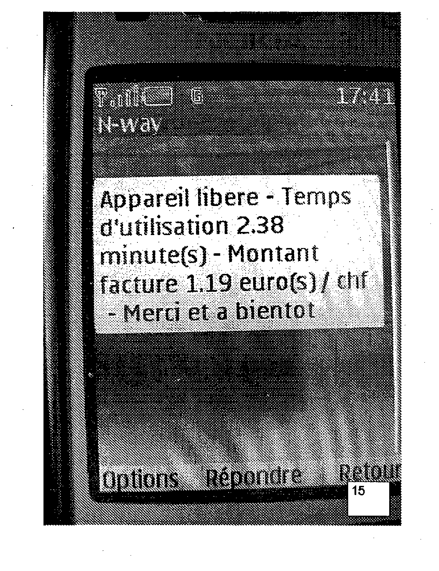

La figure 15 montre le message de fin d'utilisation qui résume la durée totale d'utilisation de la lampe et le prix total facturé pour la location.

II va sans dire que l'exemple ci-dessus peut être utilisé avec d'autres types de messages, p.ex. email, audio ou vidéo.

### Exemple 2 : Location d'un véhicule

La figure 16 présente de façon schématique un véhicule à louer, un utilisateur avec un téléphone portable et une centrale.

Les références suivantes sont utilisées sur la figure 16 :

| **A** | = **Utilisateur** |
|---|---|
| L | = Localisation de l'appareil à usage collectif (C) |
| 1 | = Boîtier de communication (liaison utilisateur-centrale) |
| id | = Saisie manuelle ou automatique du code d'identification situé sur l'appareil |

| **B** | = **Centrale** |
|---|---|
| 2 | = Emetteur-récepteur (liaison utilisateur-centrale et centrale-appareil) |
| ge | = System de gestion de l'appareil (identification appareil-utilisateur, autorisation,...) |
| s'/s " | = Transmissions signaux électromagnétiques |

| **C** | **= Appareil à usage collectif** |
|---|---|
| 3 | = Emetteur-récepteur (liaison centrale-appareil) |
| ky | = System de déverrouillage - verrouillage |

Le véhicule à louer comporte un code d'identification. Celui-ci peut être le numéro de plaque minéralogique du véhicule ou un autre numéro apposé de façon visible sur le véhicule. Le code d'identification peut également se présenter sous la forme d'un code barre ou plus généralement, sous la forme d'un signe distinctif qui peut être aisément reconnu par un utilisateur.

Le véhicule comporte également un système de verrouillage et de déverrouillage activable à distance par la centrale.

De préférence, le verrouillage, respectivement le déverrouillage, est celui des portes du véhicule. Alternativement ou en outre, le verrouillage/déverrouillage peut être appliqué à l'enclenchement du moteur du véhicule.

Le verrouillage et/ou le déverrouillage est activé depuis la centrale au moyen d'une transmission sans fil, en général par ondes radio, ou par câblage traditionnel si l'objet est statique.

Dans une première étape, l'utilisateur qui se trouve auprès d'un véhicule qu'il souhaite louer interroge la centrale par SMS au moyen de son téléphone portable. Pour ce faire, le code d'identification du véhicule (p.ex. No de plaque) est introduit dans le téléphone est transmis à la centrale. Différentes manières peuvent être utilisées pour la saisie du code d'identification, p.ex. saisie manuelle sur le clavier du téléphone, saisie automatique si le code d'identification est un code-barre et si le téléphone est muni d'un lecteur de codes-barre, etc...

Si le véhicule est libre et si l'utilisateur remplit les conditions exigées pour louer le véhicule (p.ex. s'il possède un compte-client chez la société de location, âge légal), la centrale déverrouille le véhicule à distance.

Une fois dans le véhicule, selon une variante, l'utilisateur peut immédiatement enclencher le moteur (p.ex. en appuyant sur un bouton).

Selon une autre variante qui elle a le mérite d'offrir un meilleur niveau de sécurité, l'utilisateur doit entrer un mot de passe afin de pouvoir faire démarrer le véhicule.

De préférence, lors de son fonctionnement, l'état du véhicule (p.ex. niveau de la jauge à essence) ainsi que la localisation du véhicule (p.ex. au moyen d'un système GPS) est communiqué en permanence ou périodiquement à la centrale et/ou à l'utilisateur.

Une fois l'utilisation du véhicule terminée, l'utilisateur transmet un message à la centrale par le biais de son téléphone portable. Le décompte est alors effectué puis la facture adressée à l'utilisateur ou alternativement, le compte-client est débité. La centrale transmet en retour un signal de verrouillage au véhicule.

Selon une variante, l'utilisateur interroge préalablement la centrale avec son téléphone portable afin de déterminer la localisation du véhicule disponible le plus proche. Une fois cette information reçue, il se rend vers le véhicule et procède de la même manière que décrit précédemment.

Il va de soi que l'invention ne se limite pas à l'usage de SMS pour assurer la communication entre l'utilisateur et la centrale. Tout autre moyen approprié tel que MMS ou communication vocale peut être utilisé.

Selon une variante de l'invention, lors de la première transmission à la centrale, un ou plusieurs messages indicatifs, informatifs ou à caractère publicitaires sont renvoyés de la centrale vers le terminal de l'utilisateur. Ces messages peuvent être transmis sous un format statique (écriture), acoustique (sons, musique) ou cinématique (séquence vidéo, animation..)

Ce ou ces messages peuvent également être transmis à tout moment depuis la centrale vers le terminal de l'utilisateur ou pendant toute la durée de la prestation (identification, l'occasion, restitution du véhicule, facturation)

Selon une autre variante, ce ou ces messages ne sont pas transmis par la centrale principale, mais par une centrale annexe sur l'ordre et indications de la centrale principale.
(Envoi d'indications, respectivement des coordonnées du terminal de l'utilisateur à un prestataire annexe.)

Il va de soi que l'invention ne se limite pas aux deux exemples décrits ci-dessus.

## Revendications

1. Système de location automatisé comprenant:
- un objet à louer muni d'un code d'identification,
- un élément auxiliaire lié fonctionnellement à l'objet à louer comprenant un système d'activation/désactivation activable à distance,
- un dispositif portable d'un utilisateur, tel que téléphone mobile, comprenant une interface de télécommunication sans fil,
- une centrale comprenant des moyens pour assurer une communication bidirectionnelle avec ledit dispositif portable, des moyens pour traiter ledit code d'identification de manière à identifier l'objet à louer, des moyens d'identification de l'utilisateur et des moyens pour gérer les comptes des utilisateurs de l'objet à louer;
dans lequel ladite centrale comprend des moyens de réception du code d'identification transmis par le dispositif portable, des moyens de contrôle de l'activation et la désactivation de l'élément auxiliaire et pour agir sur le système d'activation/désactivation, des moyens de communication bidirectionnelle avec ledit élément auxiliaire sans transmission directe de signaux entre le dispositif portable et l'objet à louer et/au l'élément auxiliaire et des moyens de traitements intermédiaires des signaux, la centrale est en outre configurée pour transmettre au dispositif portable, un message demandant une confirmation, pour recevoir un message d'activation (ON) envoyé par le dispositif portable à la centrale, en réponse audit message demandant une confirmation, et pour relayer ledit message d'activation à l'élément auxiliaire.

2. Système de location automatisé dans lequel le message demandant une confirmation transmis audit dispositif portable comprend une requête d'identification au moyen d'un code.

3. Système selon la revendication précédente **caractérisé par le fait que** le dispositif portable est un téléphone sans fil.

4. Système selon l'une quelconque des revendications précédentes **caractérisé par le fait que** l'interface de télécommunication autorise l'échange de messages écrits tels que SMS avec la centrale.

5. Système selon l'une quelconque des revendications précédentes comprenant des moyens pour contrôler l'état de l'objet à louer.

6. Système selon l'une quelconque des revendications précédentes comprenant des moyens pour localiser l'objet à louer.

7. Système selon la revendication précédente comprenant des moyens pour indiquer sur le dispositif portable la localisation de l'objet à louer.

8. Système selon l'une quelconque des revendications précédentes **caractérisé par le fait que** l'objet à louer est un véhicule.

9. Système selon l'une quelconque des revendications précédentes 1 à 7 **caractérisé par le fait que** l'objet à louer est fixe, p. ex. une lampe, et alimenté par une source électrique, p. ex. le réseau électrique.

10. Système selon l'une quelconque des revendications précédentes **caractérisé par le fait que** la centrale comprend des moyens pour envoyer des messages informatifs ou publicitaires sur un système d'affichage visuel ou sonore disposé sur le dispositif portable.

11. Système selon l'une quelconque des revendications précédentes **caractérisé par le fait qu'**il comprend des moyens automatisés, tels que lecteur optique, pour saisir le code d'identification.

12. Méthode de location automatisée comprenant les étapes suivantes :
- introduction d'un code d'identification de l'objet à louer dans un dispositif portable d'un utilisateur,
- transmission par le dispositif portable du code d'identification à une centrale,
- traitement par la centrale, d'une requête de location et du code d'identification de manière à identifier l'objet à louer,
- identification du dispositif portable et de l'utilisateur
- vérification que l'utilisateur remplit des conditions pour louer l'objet
- activation de l'objet à louer via un élément auxiliaire
**caractérisé en ce que** l'activation de l'objet à louer est réalisée via un élément auxiliaire lié fonctionnellement à l'objet à louer ladite activation est contrôlée par des moyens de contrôle de la centrale et comprend la transmission d'un signal d'activation par la centrale à l'élément auxiliaire sans transmission directe de signaux entre le dispositif portable et l'objet à louer et/ou l'élément auxiliaire, avec un traitement intermédiaire des signaux par la centrale,
et **en ce que** la méthode comprend :
- un envoi par la centrale audit dispositif portable d'un message demandant une confirmation;
- une transmission d'un message d'activation (ON) par ledit dispositif portable à la centrale, en réponse audit message demandant une confirmation ; et
- une retransmission dudit message d'activation de la centrale à l'élément, auxiliaire.

13. Méthode de location automatisé selon la revendication précédente, dans lequel le message demandant une confirmation comprend une requête d'identification au moyen d'un code.

14. Méthode de location sélôn la revendication 12 ou 13, comprenant en outre les étapes suivantes :
- transmission à la centrale de données relatives au fonctionnement et/ou à la localisation de l'objet à louer,
- lorsque la location est terminée, transmission à la centrale d'un signal correspondant via le dispositif portable ou via l'élément auxiliaire,
- désactivation de l'objet à louer via l'élément auxiliaire contrôle par les moyens de contrôle de la centrale.

15. Méthode de location selon l'une quelconque des revendications précédentes 11 à 14 **caractérisée par le fait que** préalablement à l'introduction du code d'identification de l'objet dans le dispositif portable, une requête est formulée auprès de la centrale afin de déterminer la localisation de l'objet à louer.

16. Méthode selon l'une quelconque des revendications précédentes 11 à 15 comprenant une étape lors de laquelle la centrale envoie au moins un message informatif ou publicitaire sur le dispositif portable.

17. Méthode de location selon la revendication 16 dans laquelle lesdits messages sont transmis sur l'ordre et indications de la centrale, à une centrale annexe qui les transmet à l'utilisateur.

## Patentansprüche

1. Automatisiertes Vermietungssystem, das Folgendes umfasst:
- ein zu vermietendes Objekt, das mit einem Identifizierungscode versehen ist,
- ein Hilfselement, das mit dem zu vermietenden Objekt funktional verbunden ist und ein fernaktivierbares Aktivierungs/Deaktivierungs-System enthält,
- eine tragbare Vorrichtung eines Anwenders wie etwa ein Mobiltelephon, das eine drahtlose Telekommunikationsschnittstelle enthält,
- eine Zentrale, die Mittel, um eine bidirektionale Kommunikation mit der tragbaren Vorrichtung sicherzustellen, Mittel, um den Identifizierungscode in der Weise zu verarbeiten, dass das zu vermietende Objekt identifiziert wird, Mittel zum Identifizieren des Anwenders und Mittel zum Verwalten der Konten der Anwender des zu vermietenden Objekts umfasst;
wobei die Zentrale Mittel zum Empfangen des Identifizierungscodes, der von der tragbaren Vorrichtung gesendet wird, Mittel zum Steuern des Aktivierens und Deaktivierens des Hilfselements und zum Einwirken auf das Aktivierungs/Deaktivierungs-System, Mittel zur bidirektionalen Kommunikation mit dem Hilfselement ohne direkte Übertragung von Signalen zwischen der tragbaren Vorrichtung und dem zu vermietenden Objekt und/oder dem Hilfselement und Zwischenverarbeitungsmittel für Signale umfasst, wobei die Zentrale außerdem konfiguriert ist, an die tragbare Vorrichtung eine Nachricht zu senden, die eine Bestätigung anfordert, um eine Aktivierungsnachricht (ON), die von der tragbaren Vorrichtung in Reaktion auf die Nachricht, die eine Bestätigung anfordert, zu der Zentrale geschickt wird, zu empfangen und um die Aktivierungsnachricht an das Hilfselement weiterzuleiten.

2. System zur automatisierten Vermietung, wobei die Nachricht, die eine Bestätigung anfordert und an die tragbare Vorrichtung gesendet wird, eine Anforderung zur Identifizierung mittels eines Codes umfasst.

3. System nach dem vorhergehenden Anspruch, **dadurch gekennzeichnet, dass** die tragbare Vorrichtung ein drahtloses Telephon ist.

4. System nach einem der vorhergehenden Ansprüche, **dadurch gekennzeichnet, dass** die Telekommunikationsschnittstelle den Austausch von schriftlichen Nachrichten wie etwa SMS mit der Zentrale zulässt.

5. System nach einem der vorhergehenden Ansprüche, die Mittel umfasst, um den Zustand des zu vermietenden Objekts zu kontrollieren.

6. System nach einem der vorhergehenden Ansprüche, das Mittel umfasst, um das zu vermietende Objekt zu lokalisieren.

7. System nach dem vorhergehenden Anspruch, das Mittel umfasst, um auf der tragbaren Vorrichtung den Ort des zu vermietenden Objekts anzugeben.

8. System nach einem der vorhergehenden Ansprüche, **dadurch gekennzeichnet, dass** das zu vermietende Objekt ein Fahrzeug ist.

9. System nach einem der vorhergehenden Ansprüche 1 bis 7, **dadurch gekennzeichnet, dass** das zu vermietende Objekt ortsfest ist, beispielsweise eine Lampe, und durch eine Stromquelle, beispielsweise das Stromnetz, versorgt wird.

10. System nach einem der vorhergehenden Ansprüche, **dadurch gekennzeichnet, dass** die Zentrale Mittel umfasst, um Informations- oder Werbenachrichten an ein visuelles oder akustisches Anzeigesystem, das in der tragbaren Vorrichtung angeordnet ist, zu schicken.

11. System nach einem der vorhergehenden Ansprüche, **dadurch gekennzeichnet, dass** es automatisierte Mittel wie etwa einen optische Leser umfasst, um den Identifizierungscode zu erfassen.

12. Automatisiertes Vermietungsverfahren, das die folgenden Schritte umfasst:
- Eingeben eines Identifizierungscodes des zu vermietenden Objekts in eine tragbare Vorrichtung eines Anwenders,
- Senden des Identifizierungscodes durch die tragbare Vorrichtung an eine Zentrale,
- Verarbeiten durch die Zentrale einer Vermietungsanforderung und des Identifizierungscodes in der Weise, dass das zu vermietende Objekt identifiziert wird,
- Identifizieren der tragbaren Vorrichtung und des Anwenders,
- Verifizieren, dass der Anwender die Bedingungen zum Mieten des Objekts erfüllt,
- Aktivieren des zu vermietenden Objekts über ein Hilfselement,
- **dadurch gekennzeichnet, dass** die Aktivierung des zu vermietenden Objekts über ein Hilfselement erfolgt, das mit dem zu vermietenden Objekt funktional verbunden ist, wobei die Aktivierung durch Steuermittel der Zentrale gesteuert wird und das Senden eines Aktivierungssignals durch die Zentrale zu dem Hilfselement ohne direkte Übertragung von Signalen zwischen der tragbaren Vorrichtung und dem zu vermietenden Objekt und/oder dem Hilfselement mit einer Zwischenverarbeitung der Signale durch die Zentrale umfasst,
und dass das Verfahren Folgendes umfasst:
- Schicken einer Nachricht, die eine Bestätigung anfordert, durch die Zentrale an die tragbare Vorrichtung;
- Senden einer Aktivierungsnachricht (ON) durch die tragbare Vorrichtung zu der Zentrale in Reaktion auf die Nachricht, die eine Bestätigung anfordert; und
- erneutes Senden der Aktivierungsnachricht von der Zentrale zu dem Hilfselement.

13. Verfahren zum automatisierten Vermieten nach dem vorhergehenden Anspruch, wobei die Nachricht, die eine Bestätigung anfordert, eine Anforderung zum Identifizieren mittels eines Codes umfasst.

14. Vermietungsverfahren nach Anspruch 12 oder 13, das außerdem die folgenden Schritte umfasst:
- Senden von Daten bezüglich der Funktion und/oder des Ortes des zu vermietenden Objekts zu der Zentrale,
- wenn die Vermietung beendet ist, Senden zu der Zentrale eines entsprechenden Signals über die tragbare Vorrichtung oder über das Hilfselement,
- Deaktivieren des zu vermietenden Objekts über das Hilfselement, das durch die Steuermittel der Zentrale gesteuert wird.

15. Vermietungsverfahren nach einem der vorhergehenden Ansprüche 11 bis 14, **dadurch gekennzeichnet, dass** vor dem Eingeben des Identifizierungscodes des Objekts in die tragbare Vorrichtung eine Anforderung bei der Zentrale formuliert wird, um den Ort des zu vermietenden Objekts zu bestimmen.

16. Verfahren nach einem der vorhergehenden Ansprüche 11 bis 15, das einen Schritt umfasst, in dem die Zentrale wenigstens eine Informations- oder Werbenachricht zu der tragbaren Vorrichtung schickt.

17. Vermietungsverfahren nach Anspruch 16, wobei die Nachrichten auf Befehl und Angaben der Zentrale zu einer Nebenzentrale gesendet werden, die sie zum Anwender sendet.

## Claims

1. Automated rental system comprising:
- a rentable object provided with an identification code;
- an auxiliary element operationally connected with the rentable object and comprising an activation/deactivation system that can be remotely activated;
- a portable device of a user, such as a mobile telephone, comprising a wireless telecommunications interface;
- a central facility comprising means to ensure two-way communication with said portable device, means for processing said identification code in such a way as to identify the object to be rented, means of identification of the user and means for managing the accounts of the users of the object to be rented;
in which said central facility comprises means of reception of the identification code transmitted by the portable device, means of control of the activation and the deactivation of the auxiliary element and for acting on the activation/deactivation system, means of two-way communication with said auxiliary element without direct transmission of signals between the portable device and the object to be rented and/or the auxiliary element and means of intermediate processings of the signals, the central facility is furthermore configured to transmit to the portable device, a message requesting a confirmation, to receive an activation message (ON) sent by the portable device to the central facility, in response to said message requesting a confirmation, and to relay said activation message to the auxiliary element.

2. Automated rental system in which the message requesting a confirmation, transmitted to said portable device, comprises a request for identification by means of a code.

3. System according to the preceding claim, **characterized in that** the portable device is a wireless telephone.

4. System according to any one of the preceding claims, **characterized in that** the telecommunications interface authorizes the exchange of written messages such as SMSs with the central facility.

5. System according to any one of the preceding claims, comprising means for controlling the state of the rentable object.

6. System according to any one of the preceding claims, comprising means for locating the rentable object.

7. System according to the preceding claim, comprising means for indicating the location of the rentable object on the portable device.

8. System according to any one of the preceding claims, **characterized in that** the rentable object is a vehicle.

9. System according to any one of the preceding Claims 1 to 7, **characterized in that** the rentable object is stationary, e.g. a light, and supplied with power by an electrical source, e.g. the electrical network.

10. System according to any one of the preceding claims, **characterized in that** the central facility comprises means for sending informative or advertising messages on a visual display system or a sound system located on the portable device.

11. System according to any one of the preceding claims, **characterized in that** it comprises automated means, such as a scanner, for inputting the identification code.

12. Automated rental method comprising the following steps:
- entering an identification code of the rentable object into a portable device of a user;
- transmission of the identification code by the portable device to a central facility;
- processing by the central facility, of a rental request and of the identification code in such a way as to identify the object to be rented,
- identification of the portable device and of the user
- verification that the user fulfills conditions for renting the object
- activation of the object to be rented by an auxiliary element
**characterized in that** the activation of the object to be rented is realized via an auxiliary element functionally linked to the object to be rented, said activation is controlled by means of control of the central facility and comprises the transmission of an activation signal by the central facility to the auxiliary element without direct transmission of signals between the portable device and the object to be rented and/or the auxiliary element, with an intermediate processing of the signals by the central facility,
and **in that** the method comprises:
- a sending by the central facility to said portable device of a message requesting a confirmation;
- a transmission of an activation message (ON) by said portable device to the central facility, in response to said message requesting a confirmation; and
- a retransmission of said activation message from the central facility to the auxiliary element.

13. Automated rental method according to the preceding claim, in which the message requesting a confirmation comprises a request for identification by means of a code.

14. Rental method according to Claim 12 or 13, furthermore comprising the following steps:
- transmission of data to the central facility relating to the operation and/or the location of the rentable object;
- when the rental is finished, transmission to the central facility of a corresponding signal via the portable device or via the auxiliary element;
- deactivation of the rentable object via the auxiliary element controlled by the means of control of the central facility.

15. Rental method according to any one of the preceding Claims 11 to 14, **characterized in that** before the entering of the identification code of the object into the portable device a request is made to the central facility in order to determine the location of the rentable object.

16. Method according to any one of the preceding Claims 11 to 15, comprising a step during which the central facility sends at least one informative or advertising message to the portable device.

17. Rental method according to Claim 16, in which said messages are transmitted on the command and indications of the central facility, to an annex central facility which transmits them to the user.
